# EUROPEAN PATENT SPECIFICATION

(11) **EP 0 976 512 B1**
(45) Date of publication and mention of the grant of the patent: **21.09.2005**
(21) Application number: 99830459.6
(22) Date of filing: 19.07.1999
(51) Int. Cl.: B27B 5/065, B23D 47/08, B27G 19/10

(54) **Device for limiting the travel of a tool of machines for working panels**
Hubbegrenzungsvorrichtung für Plattenbearbeitungsmaschine
Dispositif de limitation de la course d'un outil d'une machine à usiner des panneaux

(30) Priority: 31.07.1998 IT BO980479
(43) Date of publication of application: 02.02.2000
(73) Proprietor: SCM GROUP S.p.A., 47900 Rimini (IT)
(72) Inventor: Pucci, Aureliano, 47900 Rimini (IT)
(74) Representative: Lanzoni, Luciano

(56) References cited:
- EP-A- 0 395 617
- AU-B- 586 366
- CH-A- 661 893
- DE-A- 4 004 705
- US-A- 2 505 958
- US-A- 4 829 868
- US-A- 4 856 394

## Description

The present invention relates to a machine for working panels, in particular wood panels provided with a thin lamina for external coating or coverage, preferably made of synthetic material. The machines of particular interest for the present description are those called, in the jargon of the field, "squaring saws", and comprising a base supporting a car, manually and horizontally movable in the two directions, and able to support the panel to be machined; the base presents a fixed plane, developing laterally to the car, where are present at least a circular cutting tool, with fixed horizontal axis and with direction of rotation discordant to the advance of the panel, and a pre-cutting circular tool, situated upstream of the cutting tool with respect to the operative direction of advance of the car and with direction of rotation opposite to the direction of rotation of the tool.

The pre-cutting tool performs a pre-cut on the panel able to prevent any visible chipping, which may be caused by the tool as it exits the panel, on the coating thereof.

This pre-cutting tool, pivoted on the base, is movable in height, by means of a rotation about its pivot point, between multiple positions determined by related actuating means: a first non operative position, wherein the tool is below the plane of the base, a second intermediate pre-cutting position, wherein the pre-cutting tool is partially outside the plane to intercept and inferiorly pre-cut the panel, and, lastly, an operative raised position, wherein the pre-cutting tool is further raised to allow a deeper incision in proximity to the tail of the panel thereby allowing the cutting tool to exit at the end of the panel (which may present different profiles) in superposition with the underlying cut of the pre-cutting tool in order to prevent the aforesaid visible chipping. This technique is universally used.

The activation of the pre-cutting tool in this third operative position is usually determined by cam means composed of a guide with a trapezoid profile situated on the car and by a microswitch connected to the means for actuating the pre-cutting tool, and positioned on the base: in practice the operator positions the tail end of the panel in a predetermined point of the car (point marked on the car and determined by the manufacturer of the machine) so that, at the moment the profile of the cam intercepts the microswitch, the pre-cutting tool is raised in proximity to the arrival of the tail end of the panel. The sowing procedure disclosed so far is described in

application EP - A - 0,395,617. This type of procedure does not completely eliminate the danger of chipping on the tail end of the panel on the part of the cutting tool or of the pre-cutting tool. This drawback can be ascribed to the fact that, whilst the speed at which the pre-cutting tool rises is fixed, the cutting profile given by the pre-cutting tool in the panel is defined by the speed of advance of the car (i.e. by the operator's thrust): at high speed, the cutting profile or curve of the pre-cutting tool is relatively planar and too low exiting on the panel with the risk that it may not be intersected by the cutting tool which chips the lamina; at low speed the cutting profile or curve is steep with the pre-cutting tool exiting on the upper part of the panel, before the arrival of the tool, with related chipping of the lamina in the same upper part of the panel.

In order to reduce such risks, the operator has to experiment, at each format (panel thickness) change, an appropriate speed of advance which is a compromise between the two aforementioned extremes, it is, however, evident that the exactitude of the cut always remains linked to the operator's manual dexterity.

The aim of the present invention therefore is to eliminate the aforementioned drawback through the realisation of a travel limiter device enabling always to obtain a correct and precise pre-cutting on the panel regardless of the speed of advance of the car. The technical features of the invention can clearly be noted from the content of the claims set out below and its advantages shall become more readily apparent in the detailed description that follows, made with reference to the accompanying drawings, which represent an embodiment provided purely by way of non limiting example, wherein:
- Figure 1 shows a machine for working panels equipped with the device for limiting the travel of a tool, in accordance with the present invention, in a schematic top plan view;
- Figure 2 shows a pre-cutting tool mounted on the machine of Figure 1 fitted with the subject travel limiter device and in a first operative configuration, the figure showing a view from C referred to Figure 1;
- Figure 3 shows the pre-cutting tool of Figure 2 in a second operative configuration, the figure showing a view from C referred to Figure 1.

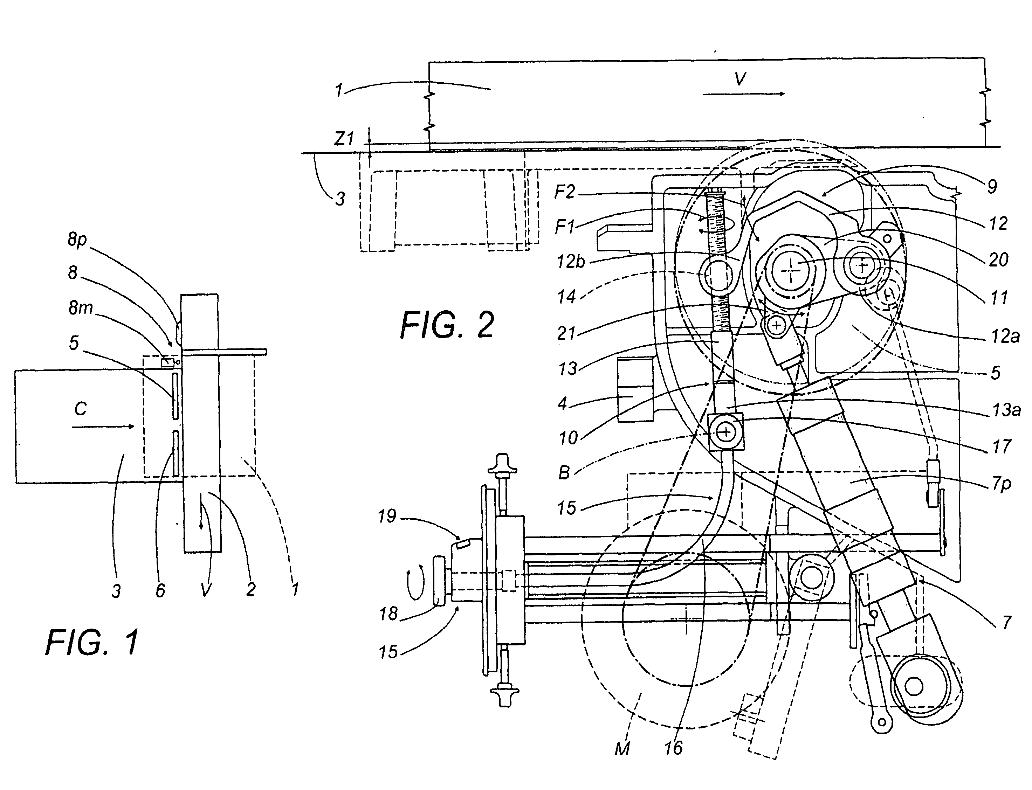

In accordance with the figures of the accompanying drawings, and with particular reference to Figure 1, the device for limiting the travel of a tool can be applied on machines for working panels 1 with predefined thickness S, and in particular on wooden panels provided with a thin external coating lamina preferably made of synthetic material.

This machine comprises a first horizontal plane 2, or car, movable in the two directions and supporting the panel 1 to be worked. To the side of the first movable plane 2 is situated a second fixed plane 3 supporting, together with a base 4, a first pre-cutting tool 5 and a second tool 6 for cutting the panel 1 positioned one after the other with respect to an operative direction of advance V of the first plane 2 and able to intercept the same panel advancing on the first plane itself.

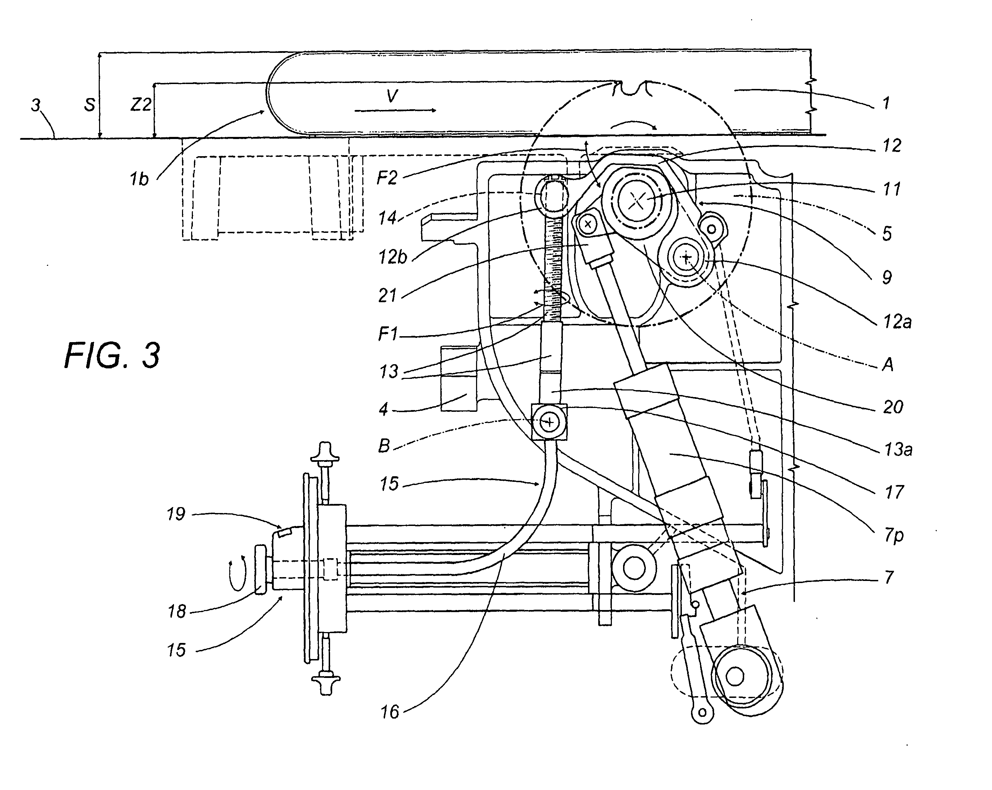

As better shown in Figures 2 and 3, the pre-cutting tool 5 is connected to an actuating device M, is pivotingly engaged on the base 4 and can be moved, through related means 7 (in the case shown, a piston 7p), between at least a first operative position, wherein the pre-cutting tool 5 is positioned at a minimum working height Z1 with respect to the second plane 3 (see Figure 2), and a second operative position, commanded by related activating means 8, wherein the pre-cutting tool 5 is situated at a maximum working height Z2 with respect to the second plane 3 in correspondence with the passage of the rear end lb of the panel 1.

As Figure 1 shows schematically, the aforesaid means 8 for activating the piston 7p (of a known kind) comprise a cam profile 8p situated on the car 2, which profile 8p intercepts a microswitch 8m positioned on the base 4 and connected and acting directly on the piston 7p.

Inside the base 4 (see Figures 2 and 3) are positioned means 9 for defining the excursion of the pre-cutting tool 5, which act on the tool itself so as to allow it to reach the maximum working height Z2 according to the thickness S of the panel 1 to be worked.

On these means 9 for defining the excursion act command and adjustment means 10, situated on the machine, and able to allow the variation of the position of the defining means with respect to the second fixed plane 3 also according to the maximum height Z2 to be reached by the pre-cutting tool 5 itself.

More specifically, see Figures 2 and 3, the pre-cutting tool 5 is provided with a support shaft 11 whose horizontal shaft is pivotingly engaged, in fulcrum point A and by means of a first connecting rod 20, to the base 4, whilst the aforesaid piston 7p acts, with its stem, at the end of a second connecting rod 21 coaxially keyed onto the shaft 11 in such a way as to allow the aforesaid two operative positions at heights Z1 and Z2. Delving more into the constructive details, the aforesaid means 9 for defining the excursion are constituted by a rocker arm 12 with arched development and pivotingly engaged, at one of its ends 12a, in correspondence with the aforesaid fulcrum point A of the support shaft 11. This rocker arm presents such an arched development as to encompass, superiorly, the shaft itself and is connected, at its other end 12b, to the command and adjustment means 10.

These command and adjustment means 10 are constituted by a threaded shaft 13, with vertical development, and engaged in a screwed-on manner with a lead screw 14 associated to the end 12b of the rocker arm 12. The threaded shaft 13 is pivotingly engaged, in B and at its inferior end 13a, to the base 4 and connected to a kinematic control set 15, able to be activated from outside the base 4, thereby allowing its rotation, in the two directions (see arrow F1 in Figures 2 and 3), thus obtaining the raising and, respectively, the lowering of the rocker arm 12 (see arrow F2 in Figures 2 and 3).

The kinematic set 15 is constituted by a flexible shaft 16 connected, through a related joining key 17, to the threaded shaft 13 in correspondence with the pivot point B in such a way as to transmit, upon external command, a torsion able to allow the aforesaid rotation of the threaded shaft 13.

The flexible shaft 16 can be connected, at its free end, to a handwheel 18 external to the machine and able to be actuated manually by an operator to obtain the adjustment of the rocker arm 12. Alternatively, there could be a motor drive connected directly to a numerically controlled command set which activates the kinematic set directly.

In proximity to the aforesaid handwheel 18 can be placed a means 19 (for instance a digital display) for displaying the height reached by the rocker arm 12 to allow a complete control by the machine operator.

The adjustment operation is simple and quick, since the operator needs merely to actuate the handwheel in one direction or the other in such a way as to obtain a rotation of the flexible shaft 16 which in turn transmits the rotation motion to the threaded shaft 13 to move the rocker arm 12 closer to or farther from the second fixed plane 3 according to the height Z2 to be set. The operator can verify that the required height has been reached on the indicator means 19.

With such a device, therefore, the pre-set aims are attained thanks to an operative structure that is extremely simple, quickly implemented and with high quality panel cutting results thanks to the safety provided by the excursion limiter which prevents the pre-cutting tool from being raised by more than the desired amount, thereby preventing chipping by the cutting tool as well as by the pre-cutting tool.

The structure of the limiter device, furthermore, is such as not to require modifications to the traditional constructive architecture of the machine for working panels.

The invention thus conceived may be subject to numerous modifications and variations, without thereby departing from the scope of the inventive concept, as defined by the appended claims. Moreover, all components can be replaced with technically equivalent elements.

## Claims

1. Machines for working panels (1) with predefined thickness (S), comprising a first horizontal plane (2) movable, in the two directions, and supporting a said panel (1) to be worked; a second fixed plane (3), positioned to the side of said movable plane (2) and supporting, together with a base (4), a first pre-cutting tool (5) and a second tool (6) for cutting said panel (1) positioned one after the other with respect to an operative direction of advance (V) of said first plane (2) and able to intercept the panel itself; said pre-cutting tool (5) being pivotingly engaged to said base (4) and movable, by related means (7), between a first operative position, wherein said pre-cutting tool (5) is positioned at a minimum working height (Z1) with respect to said second plane (3), and a second operative position, commanded by related activation means (8), wherein said pre-cutting tool is situated at a maximum working height (Z2) with respect to said second plane (3) in correspondence with the passage of the rear end (1b) of said panel (1),
**characterised in that** said device further comprises means (9) situated in said base (4) for limiting the travel of said pre-cutting tool (5), thus setting said maximum working height (Z2) according to said thickness (S) of said panel (1); and means (10) provided on said machine for adjusting the position of said limiting means (9) with respect to said second fixed plane (3).

2. Machine Device according to claim 1, wherein said pre-cutting tool (5) presents a support shaft (11) with horizontal axis pivotingly engaged, in (A), to said base (4), **characterised in that** said means (9) for defining the excursion comprise a rocker arm (12) with arched development and pivotingly engaged, at one of its ends (12a), in correspondence with said engagement point (A) of said support shaft (11) and superiorly encompassing the shaft itself; said rocker (12) being connected, at its other end (12b), to said command and adjustment means (10).

3. Machine according to claim 1 and 2, **characterised in that** said command and adjustment means (10) comprise a threaded shaft (13) engaged in screwed-on fashion to a lead screw (14) associated to the end of said rocker arm (12); said threaded shaft (13) being pivotingly engaged, in (B) and at its lower end (13a), to said base (4) and said threaded shaft (13) being connected, to a kinematic command set (15), able to be activated from outside said base (4) in such a way as to allow its rotation in the two directions, thereby causing said rocker arm (12) to be raised and, respectively, lowered.

4. Machine according to claim 1, **characterised in that** said kinematic set (15) is constituted by a flexible shaft (16) connected, through a related joining key (17), to said threaded shaft (13) in correspondence with said pivot point (B) in such a way as to transmit a torsion able to allow the rotation of said threaded shaft (13).

5. Machine according to claim 4, **characterised in that** said flexible shaft (16) is connected to a handwheel (18) external to the machine and able to be actuated manually.

6. Machine according to claim 1, **characterised in that** said command and adjustment means (10) comprise a means (19) for displaying the height reached by said means (9) for defining the excursion, situated externally to said base (4).

## Patentansprüche

1. Maschine zur Bearbeitung von Platten (1) mit vorgegebenen Stärken (S), enthaltend eine erste horizontale Fläche (2), die in zwei Richtungen beweglich ist, und welche die genannte zu bearbeitende Platte (1) trägt; eine zweite, feststehende Fläche (3), positioniert seitlich der genannten beweglichen Fläche (2) und zusammen mit einer Basis (4) ein erstes Kerbwerkzeug (5) tragend, sowie ein zweites Werkzeug (6) zum Schneiden der genannten Platte (1), die im Verhältnis zu einer operativen Vorschubrichtung (V) der genannten ersten Fläche (2) eins hinter dem anderen angeordnet und in der Lage sind, die Platte selbst abzufangen; wobei das genannte Kerbwerkzeug (5) schwenkbar an der genannten Basis (4) befestigt und durch entsprechende Mittel (7) beweglich ist, und zwar zwischen einer ersten Betriebsposition, in welcher das genannte Kerbwerkzeug (5) im Verhältnis zu der genannten zweiten Fläche (3) auf einer minimalen Arbeitshöhe (Z1) positioniert ist, und einer zweiten Betriebsposition, gesteuert durch entsprechende Aktiviermittel (8), in welcher das genannte Kerbwerkzeug im Verhältnis zu der genannten zweiten Fläche (3) auf einer maximalen Arbeitshöhe (Z2) angeordnet ist, und zwar entsprechend dem Durchlauf des hinteren Endes (1b) der genannten Platte (1),
**dadurch gekennzeichnet, dass** die genannte Vorrichtung ausserdem Mittel (9) zur Hubbegrenzung des genannten Kerbwerkzeugs (5) enthält, die in der genannten Basis (4) angeordnet sind, welche folglich die genannte maximale Arbeitshöhe (Z2) je nach der genannten Stärke (S) der genannten Platte (1) einstellen; wobei Mittel (10) an der genannten Maschine vorgesehen sind, um die Position der genannten Mittel (9) zur Hubbegrenzung im Verhältnis zu der genannten zweiten feststehenden Fläche (3) zu regulieren.

2. Maschine nach Patentanspruch 1, bei welcher das genannte Kerbwerkzeug (5) eine Trägerwelle (11) mit horizontaler Achse aufweist, angelenkt in (A) an die genannte Basis (4), **dadurch gekennzeichnet, dass** die genannten Mittel (9) zur Hubbegrenzung einen Kipphebel (12) enthalten, der einen gebogenen Verlauf hat und mit einem seiner Enden (12a) drehbar an dem genannten Verbindungspunkt (A) der genannten Trägerwelle (11) befestigt ist und oben die Welle selbst umfasst; wobei der genannte Kipphebel (12) mit seinem anderen Ende (12b) an die genannten Antriebs- und Einstellmittel (10) angeschlossen ist.

3. Maschine nach den Patentansprüchen 1 und 2, **dadurch gekennzeichnet, dass** die genannten Antriebs- und Einstellmittel (10) eine Gewindewelle (13) enthalten, die in aufgeschraubter Weise mit einer Leitspindel (14) verbunden ist, zugeordnet dem Ende des genannten Kipphebels (12); wobei die genannte Gewindewelle (13) drehbar in (B) und mit ihrem unteren Ende (13a) an der genannten Basis (4) befestigt und die genannte Gewindewelle (13) an eine kinematische Antriebsgruppe (15) angeschlossen ist, in der Lage, von ausserhalb der genannten Basis (4) auf solche Weise aktiviert zu werden, dass deren Umdrehung in zwei Richtungen erlaubt und bewirkt wird, dass der genannte Kipphebel (12) angehoben beziehungsweise gesenkt werden kann.

4. Maschine nach Patentanspruch 1, **dadurch gekennzeichnet, dass** die genannte kinematische Gruppe (15) aus einer flexiblen Welle (16) gebildet wird, die durch einen entsprechenden Verbindungskeil (17) an die genannte Gewindewelle (13) angeschlossen ist, und zwar an dem genannten Drehpunkt (B) auf solche Weise, dass eine Umdrehung übertragen wird, die das Drehen der genannten Gewindewelle (13) erlaubt.

5. Maschine nach Patentanspruch 4, **dadurch gekennzeichnet, dass** die genannte flexible Welle (16) an ein Handrad (18) ausserhalb der Maschine angeschlossen und geeignet ist, von Hand betätigt zu werden.

6. Maschine nach Patentanspruch 1, **dadurch gekennzeichnet, dass** die genannten Antriebs- und Einstellmittel (10) ein Mittel (19) zum Anzeigen der Höhe enthalten, welche von den genannten Mitteln (9) zur Hubbegrenzung erreicht worden ist, angeordnet ausserhalb der genannten Basis (4).

## Revendications

1. Une machine à usiner des panneaux (1) ayant une épaisseur (S) prédéfinie, comprenant une première table horizontale (2), mobile dans les deux directions et supportant ledit panneau (1) à usiner ; une seconde table (3), fixe, située à côté de ladite table mobile (2) et supportant, conjointement avec un bâti (4), un premier outil de pré-coupe (5) et un second outil (6) de coupe dudit panneau (1), disposés l'un après l'autre par rapport à une direction opérationnelle d'avancement (V) de ladite première table (2) et à même d'intercepter le panneau lui-même ; ledit outil de pré-coupe (5) étant fixé de façon pivotante audit bâti (4) et mobile, par l'intermédiaire de moyens (7) correspondants, entre une première position opérationnelle, dans laquelle ledit outil de pré-coupe (5) est situé à une hauteur minimum de travail (Z1) par rapport à ladite seconde table (3), et une seconde position opérationnelle, commandée par des moyens d'activation (8) correspondants, dans laquelle ledit outil de pré-coupe est situé à une hauteur maximum de travail (Z2) par rapport à ladite seconde table (3) au moment du passage de l'extrémité arrière (1b) dudit panneau (1), **caractérisée en ce que** ledit dispositif comprend en outre des moyens (9), situés dans ledit bâti (4), pour limiter la course dudit outil de pré-coupe (5) en définissant ladite hauteur maximum de travail (Z2) en fonction de ladite épaisseur (S) dudit panneau (1) ; et des moyens (10), prévus sur ladite machine, pour régler la position desdits moyens (9) de limitation par rapport à ladite seconde table fixe (3).

2. La machine selon la revendication 1, où ledit outil de pré-coupe (5) présente un arbre de support (11), à axe horizontal, fixé de façon pivotante, en (A), audit bâti (4), **caractérisée en ce que** lesdits moyens (9) de définition de l'excursion comprennent un balancier (12) à développement courbe, monté de façon pivotante, à une (12a) de ses extrémités, au niveau dudit point pivot (A) dudit arbre de support (11) et entourant supérieurement l'arbre lui-même ; ledit balancier (12) étant relié, à son autre extrémité (12b), auxdits moyens (10) de commande et de réglage.

3. La machine selon la revendication 1 et 2, **caractérisée en ce que** lesdits moyens (10) de commande et de réglage comprennent un arbre fileté (13) en prise, par vissage, avec une vis mère (14) associée à l'extrémité dudit balancier (12) ; ledit arbre fileté (13) étant fixé de façon pivotante, en (B) et au niveau de son extrémité inférieure (13a), audit bâti (4) et ledit arbre fileté (13) étant relié à un groupe cinématique (15) de commande, pouvant être activé depuis l'extérieur dudit bâti (4), de manière à permettre sa rotation dans les deux sens afin d'obtenir la montée et, respectivement, la descente dudit balancier (12).

4. La machine selon la revendication 1, **caractérisée en ce que** ledit groupe cinématique (15) est constitué par un arbre flexible (16) relié, au moyen d'une clavette de jonction (17), audit arbre fileté (13) au niveau dudit point pivot (B) de manière à transmettre une torsion à même de permettre la rotation dudit arbre fileté (13).

5. La machine selon la revendication 4, **caractérisée en ce que** ledit arbre flexible (16) est relié à un volant (18), extérieur à la machine et pouvant être actionné à la main.

6. La machine selon la revendication 1, **caractérisée en ce que** lesdits moyens (10) de commande et de réglage comprennent un moyen (19) pour afficher la hauteur atteinte par lesdits moyens (9) de définition de l'excursion, situé à l'extérieur dudit bâti (4).
